# EUROPEAN PATENT SPECIFICATION

(11) **EP 0 402 142 B1**
(45) Date of publication and mention of the grant of the patent: **21.09.1994**
(21) Application number: 90306202.4
(22) Date of filing: 07.06.1990
(51) Int. Cl.: B01D 53/34

(54) **Process for removing NOx from exhaust gas using electric discharge**
Verfahren zum Entfernen von NOx aus Abgas mit elektrischer Entladung
Procédé pour l'élimination de NOx de gaz d'échappement en utilisant la décharge électrique

(30) Priority: 07.06.1989 JP 142908/89
(43) Date of publication of application: 12.12.1990
(73) Proprietor: Okazaki, Satiko, Tokyo 168 (JP); Inomata, Tadaaki, Tokyo (JP); KABUSHIKI KAISHA KIMOTO, Tokyo (JP)
(72) Inventor: Okazaki, Satiko, Suginami-ku, Tokyo (JP); Inomata, Tadaaki, Nakano-ku, Tokyo (JP)
(74) Representative: Stoner, Gerard Patrick

(56) References cited:
- EP-A- 0 158 823
- WO-A-87/02909
- DE-A- 2 227 949

## Description

This invention relates to a process for removing a toxic NOₓ-containing gaseous component (mainly NO and NO₂), which is a notorious pollutant in exhaust gases resulting from combustion e.g. in gas engines, large-scale iron ore processing etc.

A number of processes have been proposed in the past for removing NOₓ using electric discharge, and patent applications have been filed for these processes.

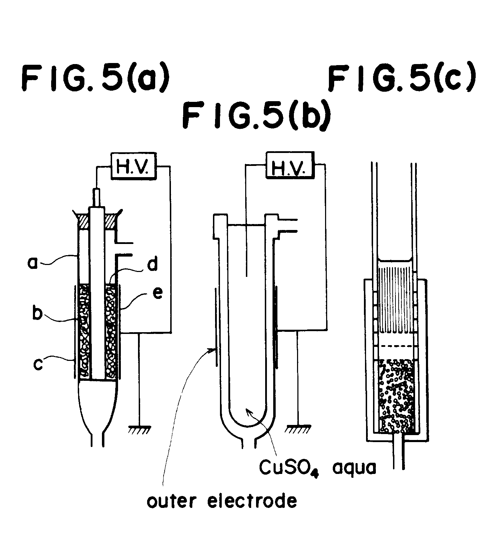

For example, in Japanese Patent 1 367 929 (Sho 61-32242) we disclose an electric discharge tube which is an "active species generator". The disclosure describes a process for removing NOₓ from exhaust gas using this. The tube comprises a cylindrical glass wall with an electrode outside and a filling of fine stainless steel wires (see Figure 5(a) herein). The tube is of low cost and can stand temperature conditions of 100°C or higher.

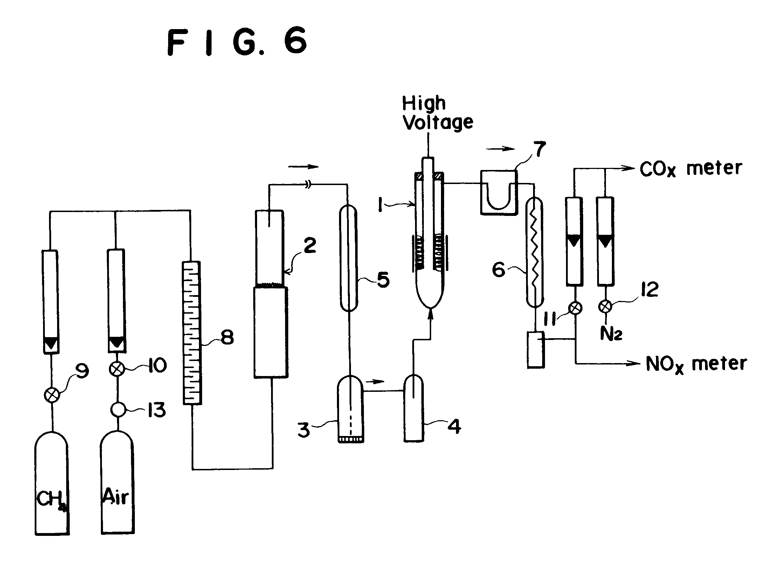

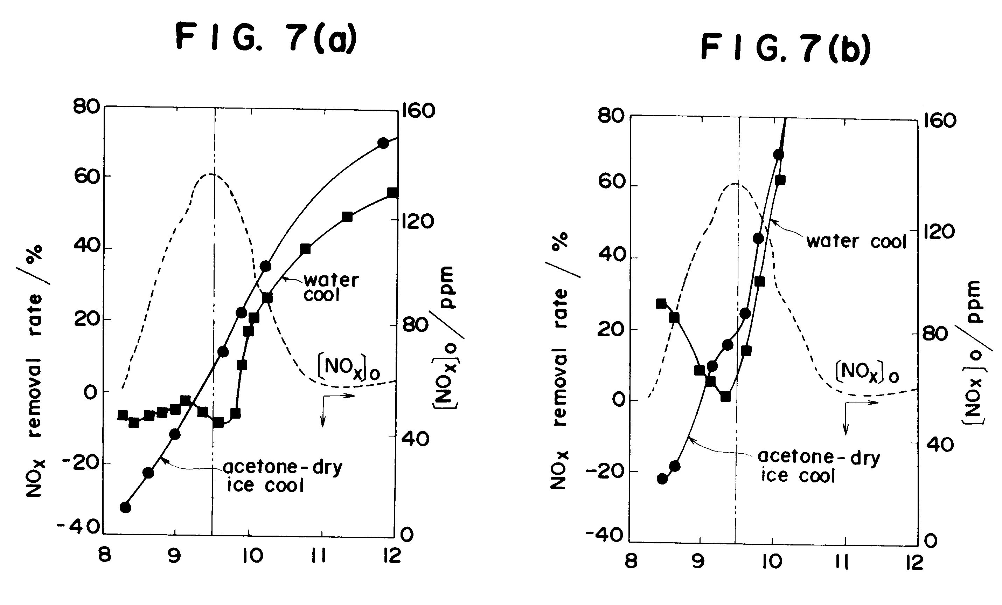

In preliminary experiments for the present purposes, we carried out treatment of exhaust gas using electric discharge (both with an active species generator as described above and with a Siemens tube), after dehydrating the exhaust gas by cooling with water or with acetone/dry ice. The electric discharge was at room temperature. Figure 6 shows apparatus used, and Figures 7(a) and 7(b) show the NOₓ removal achieved for the active species generator and Siemens tube respectively. From these figures it can be seen that 60 or 70% or more of NOₓ could be disposed of using 5W of energy on the fuel excessive side, i.e. where the proportion of fuel methane was 9.5% or larger. However only 20% or less of NOₓ could be disposed of on the oxygen excessive side (concentration not more than 9.5% methane); indeed in some cases a negative decomposition value was obtained i.e. NOₓ was generated reversibly. These results are not favourable.

The problem addressed herein is to provide a new process for removing NOₓ from exhaust gas using an electric discharge. Preferably it is desired to improve removal of NOₓ in the oxygen (air) excessive regime used generally in combustion, and also to hold in a tube so as not to generate condensed water, to discharge stably at room temperature. Preferably it is sought also to provide a technique which can be applied in e.g. a gas engine or large-scale iron ore processing industry, and which uses a simple construction.

Accordingly in one aspect the invention provides a process for removing NOₓ from exhaust gas, using an electric discharge, characterised by adding water, oxygen, air, or inert gas, either alone or with steam, to the exhaust gas at a high temperature before introducing them into the electric discharge tube, and passing the gas/mixture through the tube with the tube held at 100°C or higher, in such a manner as to assure a gas moisture content and with the result that NOₓ is removed from the exhaust gas.

In this way it is possible to treat the gas so that, because of the high temperature, it does not generate condensed water, while deliberate moisture-removal by cooling may be left out. The present process may enhance remarkably the removal of NOₓ, preferably by saturating moisture in a gas and feeding it in parallel to the exhaust gas flow, and by providing an electric discharge tube which is sufficiently durable against high voltage at high temperature, feeding high temperature exhaust gas to it as it is. Moisture saturation may be by bubbling oxygen, air, argon gas or other inert gas, or any of them and steam, through water.

In a preferred version of the process, the gas passing from the electric discharge tube undergoes an absorbing step e.g. by passing through water, an aqueous solution, or through or over an absorbent or adsorbent which may contain alkali.

Embodiments of the invention are now described by way of example with reference to the drawings in which:
Figure 1 is a block diagram showing schematically various processes for removing NOₓ from exhaust gas;
Figure 2 shows schematically an apparatus which can be used to carry out processes embodying the invention;
Figures 3 and 4 are graphs showing experimental results;
Figures 5(a), 5(b) and 5(c) are sectional views of an "active species generator" type electric discharge tube, a Siemens tube and a flat frame burner respectively;
Figure 6 is a schematic view of apparatus for a preliminary experiment already mentioned, and
Figures 7(a) and 7(b) are graphs showing results of experiments using the apparatus of Figure 6, Figure 7(a) corresponding to use of an "active species generator" and Figure 7(b) a Siemens tube.

First, the "active species generator" type electric discharge tube is described briefly with reference to Figure 5(a); please refer also to Japanese Patent Publication Sho 61-32242.

In Figure 5(a), symbol a denotes a glass tube forming a solid dielectric, b denotes a metal filler filled into the glass tube, c is an aluminium foil around the outer surface of the glass tube and forming a power supply electrode, and d is a metal gauze for retaining the metal filler b. A high voltage is applied as shown to the metal gauze d to discharge between the metal filling b and the outer aluminium electrode c, whereby oxygen gas passing through the discharge generates ozone (O₂ + O₃).

Figures 5(b) and 5(c) show a Siemens tube and a flat frame burner, of types generally known.

Figure 6 shows apparatus for carrying out a preliminary experiment. This apparatus includes an electric discharge tube 1 (as illustrated, an "active species generator" as shown in Figure 5(a)), a flat frame burner 2, a liquid separator 3, an acetone/dry ice cooler 4, water jacket coolers 5 and 6, an ozone decomposition unit 7, a gas mixer 8, needle valves 9,10,11,12 and a flow rate controller 13. In this apparatus, the discharge tube 1 is at room temperature. Exhaust gas from the flat frame burner 2 is passed through the water cooler 5 and liquid separator 3 to separate water therefrom; the gas is further cooled and dehydrated by the acetone/dry ice cooler 4, and then passes into the discharge tube 1. From the discharge tube, the exhaust gas is fed through the ozone decomposition unit 7 and the second water cooler 6, and the output was fed to a COₓ meter and an NOₓ meter.

Figure 7 shows the results obtained using the two kinds of discharge tube and two modes of cooling. These results have been discussed briefly above and are generally self-explanatory.

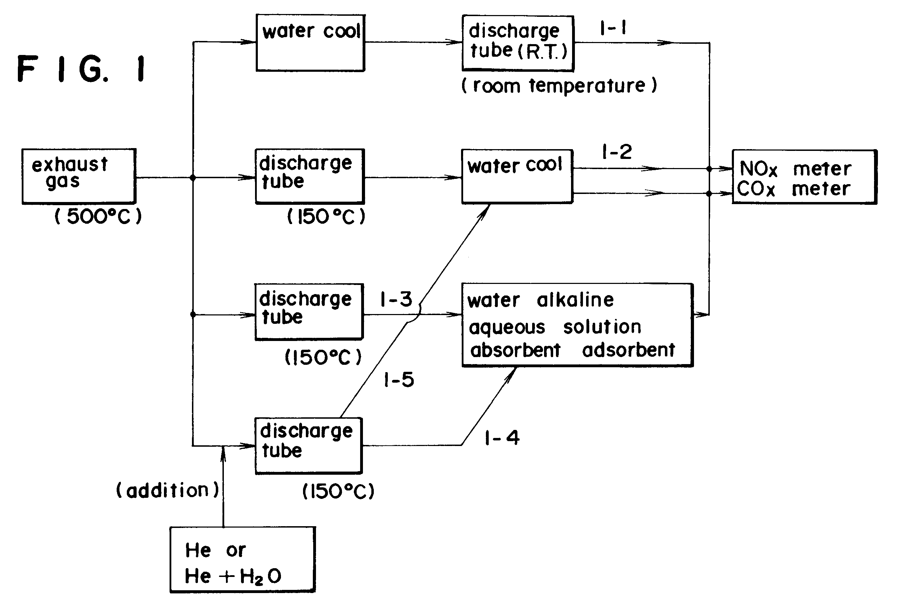

The diagram of Figure 1 shows schematically a number of possible processes for removing NOₓ from exhaust gas (flow paths 1-1 to 1-5) with use of electric discharge, and including flow paths 1-4 and 1-5 which embody the invention. For each schematic path, exhaust gas is fed at 500°C and after processing is tested with an NOₓ meter and a COₓ meter.

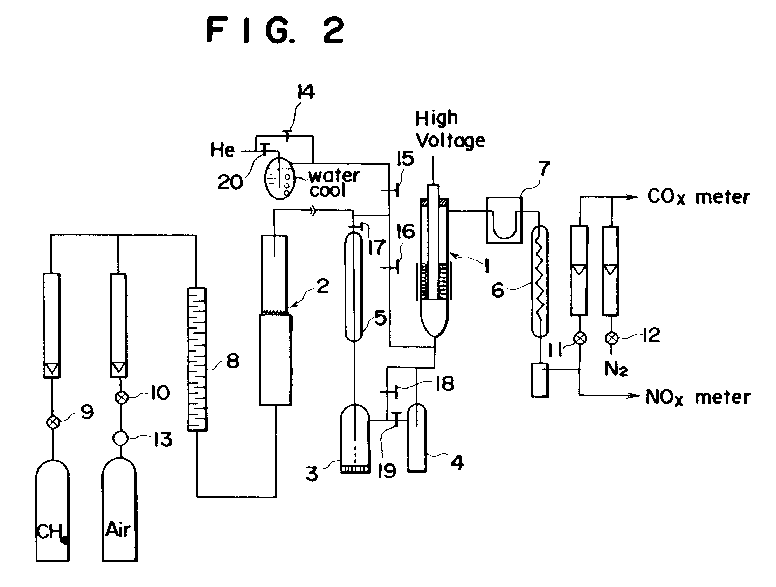

Figure 2 shows a particular experimental apparatus which can be adapted to test these various regimes. Very generally, the apparatus of Figure 2 corresponds to that of Figure 6 but a number of additional components are provided, and in particular valves 14-20 for altering the flow path.

By closing valves 15, 16 and 19 and opening valves 17 and 18, the exhaust gas is subject to the water cooler 5 and liquid separator 3. By closing valves 15, 16 and 18 but opening valves 17 and 19 the exhaust gas is subject to the acetone/dry ice cooler 4. In this regime, no water flows.

Thus, high temperature gas can be introduced directly into the discharge tube 1, which is held at 150°C for discharge, by closing valves 17 and 15 and opening the valve 16.

A helium gas supply is provided as shown in the figure, and the exhaust gas can be introduced together with helium gas by opening valve 14 as well as valves 15 and 16; valves 17 and 20 remain closed. Helium gas can be introduced with water vapour by opening valve 20 instead of valve 14, that is closing valves 14 and 17 and opening valves 15 and 16.

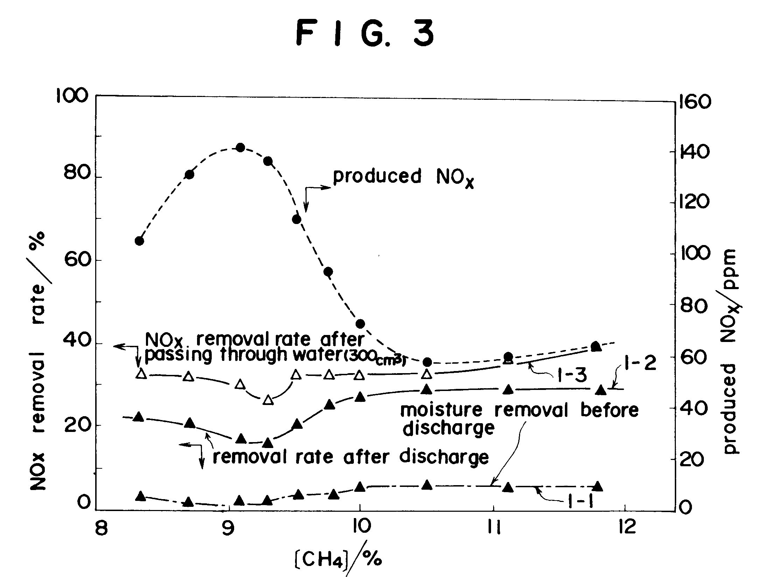

In Figure 3, curve 1-1 shows the NOₓ removal rate for water pre-cooling followed by room temperature electric discharge, as described above with reference to Figure 6.

Curve 1-2 shows results with direct introduction, i.e. without cooling, into the electric discharge tube which is now held at 150°C. It will be seen that NOₓ removal is much better than in curve 1-1.

Curve 1-3 shows results for the same procedure as 1-2, but further incorporating passing the gas through 300 cm³ of water to remove soluble content.

The curve numbers correspond of course to path numbers in Figure 1. These curves illustrate the general effects of varying the electric discharge conditions, and of passing the exhaust gas through water to remove soluble content.

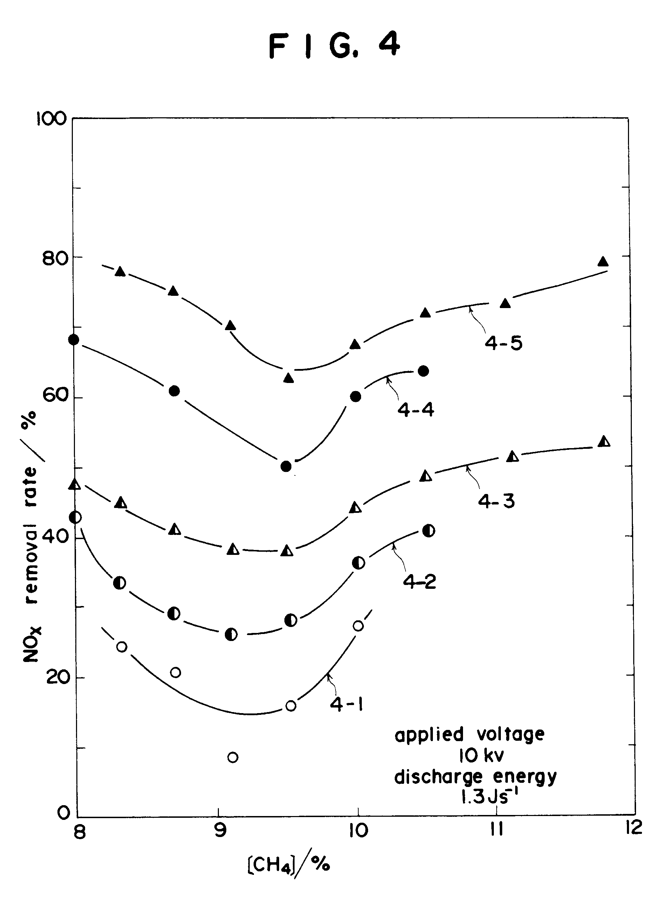

Figure 4 shows curves 4-1 to 4-5, being results for processes embodying the invention i.e. in accordance with flow paths 1-4 or 1-5 in Figure 1.

For all results shown in Figure 4, the discharge tube was at 150°C.

In a first embodiment, helium gas was introduced to the exhaust gas flow in equal quantity and equal rate, and the flow introduced to the discharge tube without measures for pre-cooling. Curve 4-1 shows the NOₓ removal result.

In a second embodiment, the helium was bubbled through water at room temperature (22°C) i.e. with valve 20 open (Figure 2). Curve 4-2 shows the result, better than curve 4-1.

In a third embodiment, water was introduced into the flow by bubbling the helium through the water at 70°C. Curve 4-3 shows the further improvement obtained in NOₓ removal.

These first three embodiments correspond to flow path 1-5 in Figure 1.

In a fourth embodiment, the process was conducted as in the second, but the exhaust gas from the discharge was additionally bubbled through 400 cm³ of water. Curve 4-4 shows the further improved result, and curve 4-5 the result of a fifth embodiment where the subsequent absorption in water was added to the process of the third embodiment.

The above examples show how the process of the invention may improve NOₓ removal on the oxygen-excessive side, and also the remarkable further improvement which is obtained when moisture is added to the exhaust gas. A further considerable improvement is achieved by subjecting the exhaust gas from the electric discharger to an absorption e.g. by passing through water; it is apparent that the NOₓ component soluble in water is increased by the electric discharge process.

In all the above examples, helium was used as an inert gas on its own, and to introduce water vapour into the gas stream. However other gases may be used, for example argon, neon or indeed oxygen or air according to the results which are desired. Nitrogen non-mixture system is also preferable, where NOₓ generation by the electric discharge is not apprehended.

Generally speaking, the electric discharge tube should be made so as not to cause difficulties due to expansion at high temperatures. If the electric discharge tube is fundamentally composed of material having necessary insulation capacity against the voltage required (several kV to several tens of kV) at 100°C or higher, materials such as quartz, ceramics, mica or the like may be used.

In the preferred treatment to remove undesired gas components after the electric discharge, a solid absorbent, semi-solid liquid or other adsorbent may be used instead of water or alkaline aqueous solution. Furthermore, since carbon dioxide gas (CO₂) contained in the exhaust gas tends to generate carbon monoxide (CO) as an oxygen source upon electric discharge, it is preferred to remove it by e.g. absorbing and precipitating, before the discharge stage.

## Claims

1. A process for removing NOₓ from high temperature exhaust gas, comprising
adding any of water, oxygen, air or inert gas to the high temperature exhaust gas, assuring that the resulting high temperature exhaust gas mixture has a moisture content;
passing the high temperature exhaust gas mixture through an electric discharge tube (1) which is held at 100°C or higher to avoid condensation of moisture therein, to remove NOₓ from the exhaust gas.

2. A process according to claim 1 in which oxygen, air or inert gas is added to the exhaust gas in combination with water vapour.

3. A process according to claim 2 in which the water vapour is introduced by bubbling the oxygen, air or inert gas through water before addition to the exhaust gas.

4. A process according to claim 1 in which any one of water, oxygen, air or inert gas is added to the exhaust gas alone.

5. A process according to any one of the preceding claims in which a said inert gas is helium, argon or neon.

6. A process according to any one of the preceding claims, further comprising subjecting the exhaust gas issuing from the electric discharge tube (1) to absorption using water, an aqueous solution or an alkali-containing absorbent or adsorbent.

## Patentansprüche

1. Verfahren zum Entfernen von Noₓ aus Hochtemperaturabgas, umfassend:
das Hinzufügen von Wasser, Sauerstoff, Luft oder Inertgas zum Hochtemperaturabgas, wobei sichergestellt wird, daß die resultierende Hochtemperaturabgasmischung einen Feuchtigkeitsgehalt aufweist;
das Hindurchschicken der Hochtemperaturabgasmischung durch ein elektrisches Entladungsrohr (1), das bei einer Temperatur von 100°C oder mehr gehalten wird, um eine Kondensation der darin enthaltenen Feuchtigkeit zu verhindern, um NOₓ aus dem Abgas zu entfernen.

2. Verfahren nach Anspruch 1, worin Sauerstoff, Luft oder Inertgas dem Abgas in Kombination mit Wasserdampf hinzugefügt wird.

3. Verfahren nach Anspruch 2, worin der Wasserdampf eingeleitet wird, indem vor dem Hinzufügen zum Abgas der Sauerstoff, die Luft oder das Inertgas durch Wasser hindurchgeperlt wird.

4. Verfahren nach Anspruch 1, worin Wasser, Sauerstoff oder Inertgas dem Abgas alleine beigegeben wird.

5. Verfahren nach einem der vorhergehenden Ansprüche, worin ein genanntes Inertgas Helium, Argon oder Neon ist.

6. Verfahren nach einem der vorhergehenden Ansprüche, das weiters das Unterwerfen des aus dem elektrischen Entladungsrohr (1) austretenden Abgases der Absorption unter Verwendung von Wasser, einer wässerigen Lösung oder eines alkalihältigen Ab- oder Adsorptionsmittels umfaßt.

## Revendications

1. Procédé pour retirer des NOₓ d'un gaz d'échappement à température élevée, comprenant les étapes consistant à :
ajouter de l'eau, de l'oxygène, de l'air ou un gaz inerte au gaz d'échappement à température élevée, s'assurer que le mélange de gaz d'échappement à température élevée qui en résulte ait une teneur d'humidité;
faire passer le mélange de gaz d'échappement à température élevée à travers un tube de décharge électrique (1) qui est maintenue à 100°C ou à une température plus élevée pour éviter la condensation de l'humidité à l'intérieur, afin de retirer les NOₓ des gaz d'échappement.

2. Procédé selon la revendication 1, dans lequel l'oxygène, l'air ou le gaz inerte est ajouté au gaz d'échappement en combinaison avec de la vapeur d'eau.

3. Procédé selon la revendication 2, dans lequel la vapeur d'eau est introduite en bullant l'oxygène, l'air ou le gaz inerte à travers l'eau avant l'addition au gaz d'échappement.

4. Procédé selon la revendication 1, dans lequel n'importe lequel parmi l'eau, l'oxygène, l'air ou le gaz inerte est ajouté au gaz d'échappement seul.

5. Procédé selon l'une des revendications précédentes, dans lequel ledit gaz inerte est de l'hélium, de l'argon ou du néon.

6. Procédé selon l'une des revendications précédentes, comprenant en outre l'étape consistant à soumettre les gaz d'échappement sortant du tube de décharge électrique (1) à une absorption en utilisant de l'eau, une solution aqueuse ou un absorbant ou adsorbant contenant des alcalis.
